(19)

Europäisches
Patentamt

European
Patent Office

Office européen
des brevets

(11)  **EP 4 755 856 A1**

(12)  **EUROPEAN PATENT APPLICATION**
published in accordance with Art. 153(4) EPC

(43) Date of publication:
**10.06.2026   Bulletin 2026/24**

(21) Application number: **24861582.5**

(22) Date of filing: **07.06.2024**

(51) International Patent Classification (IPC):
**C03C 3/21** $^{(2006.01)}$         **C03C 3/16** $^{(2006.01)}$
**C03C 3/068** $^{(2006.01)}$

(52) Cooperative Patent Classification (CPC):
**C03C 3/062; C03C 3/068; C03C 3/16; C03C 3/21;**
**C03C 4/00; C03C 4/20**

(86) International application number:
**PCT/CN2024/098006**

(87) International publication number:
**WO 2025/050734 (13.03.2025 Gazette 2025/11)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **07.09.2023   CN 202311149924**

(71) Applicant: **CDGM Glass Co. Ltd.**
**Chengdu, Sichuan 610100 (CN)**

(72) Inventors:
• **KUANG, Bo**
 **Chengdu, Sichuan 610100 (CN)**
• **HE, Bo**
 **Chengdu, Sichuan 610100 (CN)**
• **YANG, Famao**
 **Chengdu, Sichuan 610100 (CN)**

(74) Representative: **Chung, Hoi Kan**
**Mandarin IP Limited**
**7 Cherry Trees**
**Great Shelford**
**Cambridge CB22 5XA (GB)**

(54)  **OPTICAL GLASS, GLASS PREFORM, OPTICAL ELEMENT, AND OPTICAL INSTRUMENT**

(57)    An optical glass, including following components in percentage by weight: $P_2O_5$: 20-35%; $Nb_2O_5$: 37-55%; $TiO_2$: 1-12%; $BaO$: 4-19%; and $Na_2O$: 0.5-14%. Through reasonable component design, this optical glass is free of environmentally harmful components such as $PbO$, and simultaneously exhibits high refractive index and high dispersion properties, satisfying the requirements for use in high-performance optical instruments.

EP 4 755 856 A1

**Description**

TECHNICAL FIELD

This application relates to the field of optical glass, and in particular to an optical glass with a refractive index of 1.82-1.89 and an Abbe number of 18-26, glass preforms, optical elements, and optical instruments made therefrom.

BACKGROUND

In recent years, the digitalization and the image and video high-definition technology of optical instruments have been developing rapidly. In particular, the high definition of images and videos is very prominent in optical instruments such as digital cameras, video cameras, and projectors. Simultaneously, in the optical systems incorporated in these optical instruments, efforts are made to reduce the number of optical elements such as lenses and prisms to achieve weight reduction and miniaturization. Under the same radius of curvature, glass with a higher refractive index provides a larger imaging field of view, which is beneficial for reducing the number of optical elements in the optical instrument. With the trend towards miniaturization of optical instruments, the demand for high-refractive-index, high-dispersion optical glass with a refractive index of 1.82-1.89 and an Abbe number of 18-26 is becoming increasingly evident.

Chinese Patent Publications CN1186279C and CN1229293C respectively disclose high-refractive-index, high-dispersion optical glasses, both of which contain a large amount of PbO. PbO is harmful to the environment, and the high density of the glass is not unfavorable to the lightweight requirements of optical glass. Chinese Patent Applications CN102471130A, CN101932532A, and CN101289275A respectively disclose high-refractive-index, high-dispersion optical glasses, each containing a large amount of $SiO_2$, whose melting properties need improvement.

SUMMARY

The technical problem to be solved by this application is to provide an optical glass having a refractive index of 1.82 to 1.89 and an Abbe number of 18 to 26, while meeting environmental protection requirements.

To solve the above technical problem, the present application adopts the following technical solutions.

The optical glass includes following components in percentage by weight: 20-35% of $P_2O_5$, 37-55% of $Nb_2O_5$, 1-12% of $TiO_2$, 4-19% of $BaO$, and 0.5-14% of $Na_2O$.

Furthermore, the optical glass further includes following components in percentage by weight: 0-8% of $CaO$; and/or 0-5% of $MgO$; and/or 0-8% of $SrO$; and/or 0-5% of $ZnO$; and/or 0-5% of $Li_2O$; and/or 0-5% of $K_2O$; and/or 0-5% of $Ln_2O_3$; and/or 0-5% of $SiO_2$; and/or 0-5% of $B_2O_3$; and/or 0-3% of $Al_2O_3$; and/or 0-3% of $WO_3$; and/or 0-5% of $ZrO_2$; and/or 0-3% of $Bi_2O_3$; and/or 0-1% of a fining agent; wherein the $Ln_2O_3$ is one or more selected from $La_2O_3$, $Gd_2O_3$, $Y_2O_3$, $Yb_2O_3$, and $Lu_2O_3$, and the fining agent is one or more selected from $Sb_2O_3$, $SnO_2$, and $CeO_2$.

The optical glass includes following components in percentage by weight: 20-35% of $P_2O_5$, 37-55% of $Nb_2O_5$, 1-12% of $TiO_2$, 4-19% of $BaO$, 0.5-14% of $Na_2O$, 0-8% of $CaO$, 0-5% of $MgO$, 0-8% of $SrO$, 0-5% of $ZnO$, 0-5% of $Li_2O$, 0-5% of $K_2O$, 0-5% of $Ln_2O_3$, 0-5% of $SiO_2$, 0-5% of $B_2O_3$, 0-3% of $Al_2O_3$, 0-3% of $WO_3$, 0-5% of $ZrO_2$, 0-3% of $Bi_2O_3$, and 0-1% of a fining agent, wherein the $Ln_2O_3$ is one or more selected from $La_2O_3$, $Gd_2O_3$, $Y_2O_3$, $Yb_2O_3$, and $Lu_2O_3$, and the fining agent is one or more selected from $Sb_2O_3$, $SnO_2$, and $CeO_2$.

Furthermore, the optical glass has components expressed in percentage by weight, wherein a ratio of $(ZnO+Li_2O+K_2O+WO_3+B_2O_3+Bi_2O_3)$ to $SrO$ is 2.0 or less, preferably 1.5 or less, more preferably 1.0 or less, and further preferably 0.5 or less.

Further, the optical glass has components expressed in percentage by weight, wherein a ratio of $(Li_2O+B_2O_3+B1_2O_3)$ to $TiO_2$ is 1.0 or less, preferably 0.8 or less, more preferably 0.5 or less, and further preferably 0.2 or less.

Further, the optical glass has components expressed in percentage by weight, wherein a ratio of $SrO$ to $TiO_2$ is 0.01 to 5.0, preferably 0.01 to 2.0, more preferably 0.05 to 1.0, and further preferably 0.1 to 0.7.

Further, the optical glass has components expressed in percentage by weight, wherein a ratio of $BaO$ to $(Na_2O+K_2O+TiO_2)$ is 0.4 to 5.0, preferably 0.5 to 3.0, more preferably 0.6 to 2.5, and further preferably 0.7 to 1.5.

Further, the optical glass has components expressed in percentage by weight, wherein a ratio of $Nb_2O_5$ to $P_2O_5$ is 1.3 to 2.7, preferably 1.4 to 2.5, more preferably 1.5 to 2.2, and further preferably 1.6 to 2.0.

Further, the optical glass has components expressed in percentage by weight, wherein a ratio of $(SiO_2+CaO+ZnO)$ to $SrO$ is 0.3 to 8.0, preferably 0.5 to 5.0, more preferably 0.6 to 3.0, and further preferably 0.7 to 2.0.

Further, the optical glass has components expressed in percentage by weight, wherein a ratio of $(WO_3+ZnO+K_2O+CaO+MgO)$ to $TiO_2$ is 2.0 or less, preferably 0.05 to 1.5, more preferably 0.1 to 1.0, and further preferably 0.2 to 0.8.

Further, the optical glass has components expressed in percentage by weight, wherein a ratio of $(WO_3+K_2O+TiO_2+B_2O_3)$ to $Nb_2O_5$ is 0.03 to 0.4, preferably 0.04 to 0.3, more preferably 0.05 to 0.25, and further preferably 0.06 to 0.15.

Further, the optical glass has components expressed in percentage by weight, wherein a ratio of $Na_2O$ to BaO is 0.05 to 2.0, preferably 0.1 to 1.5, more preferably 0.2 to 1.0, and further preferably 0.4 to 0.9.

Further, the optical glass has components expressed in percentage by weight, wherein a ratio of BaO to $P_2O_5$ is 0.15 to 0.9, preferably 0.25 to 0.8, more preferably 0.3 to 0.7, and further preferably 0.35 to 0.6.

Further, the optical glass has components expressed in percentage by weight, wherein a ratio of ($Li_2O+B_2O_3 +TiO_2$) to BaO is 0.06 to 2.0, preferably 0.07 to 1.5, more preferably 0.08 to 1.0, and further preferably 0.1 to 0.5.

Further, the optical glass has components expressed in percentage by weight, wherein a ratio of $TiO_2$ to CaO is 0.4 to 10.0, preferably 0.8 to 8.0, more preferably 1.0 to 6.0, and further preferably 1.2 to 5.0.

Further, the optical glass, components of which expressed in percentage by weight, includes:

$P_2O_5$: 22-32%, preferably 25-30%; and/or
$Nb_2O_5$: 41-52%, preferably 43-50%; and/or
$TiO_2$: 2-10%, preferably 3-7%; and/or
BaO: 6-16.5%, preferably 10-15%; and/or
$Na_2O$: 2-12%, preferably 5-10%; and/or
CaO: greater than 0% but not more than 6%, preferably 1-4%; and/or
MgO: 0-3%, preferably 0-1%; and/or
SrO: greater than 0% but not more than 5%, preferably 0.5-3%; and/or
ZnO: 0-3%, preferably 0-1%; and/or
$Li_2O$: 0-3%, preferably 0-1%; and/or
$K_2O$: 0-3%, preferably 0-1%; and/or
$Ln_2O_3$: 0-3%, preferably 0-1%; and/or
$SiO_2$: 0-3%, preferably 0-1%; and/or
$B_2O_3$: 0-3%, preferably 0-1%; and/or
$Al_2O_3$: 0-2%, preferably 0-1%; and/or
$WO_3$: 0-2%, preferably 0-1%; and/or
$ZrO_2$: 0-2%, preferably 0-1%; and/or
$Bi_2O_3$: 0-2%, preferably 0-1%; and/or
a fining agent: 0-0.5%, preferably 0-0.1%,
wherein $Ln_2O_3$ is one or more selected from $La_2O_3$, $Gd_2O_3$, $Y_2O_3$, $Yb_2O_3$, and $Lu_2O_3$, and the fining agent is one or more selected from $Sb_2O_3$, $SnO_2$, and $CeO_2$.

Further, the optical glass does not include MgO; and/or does not include ZnO; and/or does not include $Li_2O$; and/or does not include $K_2O$; and/or does not include $Ln_2O_3$; and/or does not include $B_2O_3$; and/or does not include $Al_2O_3$; and/or does not include $WO_3$; and/or does not include $ZrO_2$; and/or does not include $Bi_2O_3$; and/or does not include a fining agent, wherein $Ln_2O_3$ is one or more selected from $La_2O_3$, $Gd_2O_3$, $Y_2O_3$, $Yb_2O_3$, and $Lu_2O_3$, and the fining agent is one or more selected from $Sb_2O_3$, $SnO_2$, and $CeO_2$.

Further, the optical glass has a refractive index $n_d$ of 1.82-1.89, preferably 1.83-1.88, more preferably 1.84-1.87; and an Abbe number $\nu_d$ of 18-26, preferably 20-25, more preferably 21-24.

Further, the optical glass has a thermal expansion coefficient $\alpha_{100/300°C}$ of $100\times10^{-7}$/K or less, preferably $95\times10^{-7}$/K or less, more preferably $90\times10^{-7}$/K or less; and/or an acid resistance stability $D_A$ of Class 2 or better, preferably Class 1; and/or a water resistance stability $D_W$ of Class 2 or better, preferably Class 1; and/or a relative partial dispersion $P_{g,F}$ of 0.58-0.72, preferably 0.60-0.68, more preferably 0.62-0.65; and/or a relative partial dispersion deviation $\Delta P_{g,F}$ of 0.08 or less, preferably 0.005-0.06, more preferably 0.01-0.04; and/or a transition temperature $T_g$ of 670°C or less, preferably 660°C or less, more preferably 650°C or less; and/or an abrasion degree $F_A$ of 250-290, preferably 260-285, more preferably 265-280; and/or a density $\rho$ of 4.00 g/cm$^3$ or less, preferably 3.90 g/cm$^3$ or less, more preferably 3.80 g/cm$^3$ or less; and/or $\lambda_{70}$ of 430 nm or less, preferably 420 nm or less, more preferably 410 nm or less; and/or $\lambda_5$ of 400 nm or less, preferably 390 nm or less, more preferably 380 nm or less; and/or a weathering resistance CR of Class 2 or better, preferably Class 1; and/or a Young's modulus E of $8,000\times10^7$ Pa or higher, preferably $8,500\times10^7$ Pa or higher, more preferably $9,000\times10^7$ Pa or higher; and/or a bubble degree of Class A or better, preferably A0 or higher, more preferably A00.

A glass preform is made from the above optical glass.

An optical element is made from the optical glass or from the glass preform.

An optical instrument includes the optical glass or the optical element.

The beneficial effect of the present application is that, through a reasonable composition design, the optical glass of the present application does not include environmentally harmful components such as PbO, while having high refractive index and high dispersion properties, and satisfying the requirements of high-performance optical instruments.

DETAILED DESCRIPTION OF THE EMBODIMENTS

The embodiments of the optical glass of the present application will be described in detail below. However, the present application is not limited to the embodiments described below and may be implemented with appropriate modifications within the scope of the objectives of the application. Furthermore, portions that would otherwise be repetitive may be omitted as appropriate, but this will not limit the spirit of the application. In the following text, the optical glass of the present application is sometimes referred to simply as "glass."

Optical Glass

The range of each component (ingredient) of the optical glass of the present application will be described below. In the present application, unless otherwise specified, a content of each component and a total content are all expressed as weight percentages (wt%), that is, the weight percentage of the content of each component and the total content relative to the total amount of glass material of an oxide-converted composition. Here, the "oxide-converted composition" means that when the oxides, complex salts, and hydroxides used as raw materials for the optical glass of the present application decompose and transform into oxides upon melting, the total amount of such oxides is regarded as 100%.

Unless otherwise specified in specific circumstances, the numerical ranges listed in the present application include upper and lower limits. The expressions "above / or more " and "below / or less " include endpoint values, and all integers and fractions included in the range, and are not limited to the specific values enumerated within the defined ranges. The term "and/or" as used herein is inclusive. For example, "A and/or B" means A alone, B alone, or both A and B.

Essential Components and Optional Components

$P_2O_5$ is a network former of the glass of this application. Compared to silicate glass, phosphate glass can melt at a low temperature, which is beneficial for improving the optical transmittance of the glass. If the $P_2O_5$ content is too high, it is difficult for the glass to obtain a relatively high refractive index. Therefore, the $P_2O_5$ content in this application is 20-35%, preferably 22-32%, and more preferably 25-30%.

$Nb_2O_5$ is a high-refractive-index and high-dispersion component that can improve the refractive index and devitrification resistance of the glass, and has the effect of reducing the relative partial dispersion ($P_{g,F}$) and anomalous partial dispersion value ($\Delta P_{g,F}$) of the glass. In this application, the above effects are achieved by containing more than 37% of $Nb_2O_5$. Preferably, the lower limit of $Nb_2O_5$ content is 41%, more preferably 43%. If the $Nb_2O_5$ content exceeds 55%, the thermal stability and chemical durability of the glass decreases, and the optical transmittance declines. Therefore, an upper limit of the $Nb_2O_5$ content in this application is 55%, preferably 52%, and more preferably 50%.

In some embodiments, controlling a ratio of $Nb_2O_5$ content to $P_2O_5$s content ($Nb_2O_5/P_2O_5$) within a range of 1.3 to 2.7 can improve the crystallization resistance and chemical durability of the glass, optimize the Young's modulus of the glass, and more easily obtain the desired $P_{g,F}$ value and $\Delta P_{g,F}$ value. Therefore, preferably, the $Nb_2O_5/P_2O_5$ ratio is from 1.3 to 2.7, more preferably from 1.4 to 2.5, further preferably from 1.5 to 2.2, and even more preferably from 1.6 to 2.0.

$TiO_2$ exhibits high-refractive-index and high-dispersion characteristics and can improve the chemical stability of the glass, as well as adjust the relative partial dispersion ($P_{g,F}$) and the the anomalous partial dispersion value ($\Delta P_{g,F}$). If its content is excessively high, the devitrification resistance and optical transmittance of the glass decrease. Therefore, the $TiO_2$ content is 1-12%, preferably 2-10%, and more preferably 3-7%.

BaO can improve the devitrification resistance and hardness of the glass and reduce the temperature coefficient of refractive index and the thermal expansion coefficient. In the present application, by incorporating more than 4% of BaO, the above effects can be achieved. The BaO content is preferably 6% or more, and more preferably 10% or more. On the other hand, by limiting the BaO content to 19% or less, a reduction in chemical durability caused by an excessively high BaO content can be prevented. Therefore, the BaO content is 19% or less, preferably 16.5% or less, and more preferably 15% or less.

In some embodiments, by controlling the ratio of BaO content to $P_2O_5$ content ($BaO/P_2O_5$) within a range of 0.15 to 0.9, the weather resistance and optical transmittance of the glass can be improved, and the wear resistance can be optimized. Accordingly, the preferred $BaO/P_2O_5$ ratio is 0.15 to 0.9, more preferably 0.25 to 0.8, further preferably 0.3 to 0.7, and still further preferably 0.35 to 0.6.

CaO helps adjust the optical constants of the glass and improves the processability and weather resistance of the glass. However, if the CaO content is too high, the crystallization resistance of the glass deteriorates. Therefore, the CaO content is 0-8%, preferably greater than 0 but not more than 6%, and more preferably 1-4%.

In some embodiments, by controlling the ratio of the $TiO_2$ content to the CaO content ($TiO_2/CaO$) within a range of 0.4-10.0, the thermal expansion coefficient of the glass can be reduced, and the Young's modulus and wear resistance can be optimized. Accordingly, the preferred $TiO_2/CaO$ ratio is 0.4-10.0, more preferably 0.8-8.0, further preferably 1.0-6.0, and still further preferably 1.2-5.0.

SrO can adjust the refractive index and dispersion of the glass. However, if its content is too high, the chemical durability of the glass decreases, and the cost of the glass also increases. Therefore, the SrO content is 0-8%, preferably greater than 0 but not more than 5%, and more preferably 0.5-3%.

In some embodiments, by controlling the ratio of the SrO content to the $TiO_2$ content ($SrO/TiO_2$) within a range of 0.01-5.0, the glass can achieve desired $P_{g,F}$ value and $\Delta P_{g,F}$ value while improving the Young's modulus and preventing a reduction in optical transmittance. Accordingly, the preferred $SrO/TiO_2$ ratio is 0.01-5.0, more preferably 0.01-2.0, further preferably 0.05-1.0, and still further preferably 0.1-0.7.

MgO is beneficial for reducing the density and melting temperature of glass, but excessive MgO content makes it difficult to achieve a desired refractive index of glass, and the glass's devitrification resistance and stability decrease. Therefore, the content of MgO is 0-5%, preferably 0-3%, and more preferably 0-1%. In some embodiments, it is further preferred that the glass is free of MgO.

ZnO can lower the transition temperature and melting temperature of glass, improve the chemical durability of the glass, and reduce the high-temperature viscosity. However, if the ZnO content is too high, the devitrification resistance of the glass deteriorates, and devitrification easily occurs due to the excessively low viscosity. Therefore, the content of ZnO in this application is 0-5%, preferably 0-3%, and more preferably 0-1%. In some embodiments, it is further preferred that the glass is free of ZnO.

$Li_2O$ can improve the meltability of the glass and lower the transition temperature. However, if its content is too high, it is difficult to achieve the desired refractive index of the glass, and the chemical durability of the glass deteriorates. Therefore, the content of $Li_2O$ in this application is 0-5%, preferably 0-3%, and more preferably 0-1%. In some embodiments, it is further preferred that the glass is free of $Li_2O$.

$Na_2O$ can improve the meltability and formability of the glass and optimize the optical transmittance. However, if its content is too high, it is detrimental to the coefficient of thermal expansion and chemical durability of the glass. Therefore, the $Na_2O$ content is 0.5-14%, preferably 2-12%, and more preferably 5-10%.

In some embodiments, controlling the ratio of $Na_2O$ content to BaO content ($Na_2O/BaO$) within a range of 0.05-2.0 is beneficial for improving the bubble degree of the glass, optimizing the abrasion resistance of the glass, and preventing an increase in the coefficient of thermal expansion. Therefore, $Na_2O/BaO$ is preferably 0.05-2.0, more preferably 0.1-1.5, further preferably 0.2-1.0, and even more preferably 0.4-0.9.

$K_2O$ has the effect of improving the thermal stability and meltability of the glass, but if its content is too high, the devitrification resistance of the glass decreases. Therefore, the $K_2O$ content is 0-5%, preferably 0-3%, and more preferably 0-1%. In some embodiments, it is further preferred that the glass is free of $K_2O$.

In some embodiments, controlling the ratio of BaO content to the total content of $Na_2O$, $K_2O$, and $TiO_2$ ($BaO/(Na_2O+K_2O+TiO_2)$) within the range of 0.4 to 5.0, makes it easier to obtain the desired $P_{g,F}$ value and $\Delta P_{g,F}$ value for the glass, and prevents an increase in glass density. Therefore, $BaO/(Na_2O+K_2O+TiO_2)$ is preferably 0.4-5.0, and more preferably 0.5-3.0. Furthermore, controlling $BaO/(Na_2O+K_2O+TiO_2)$ within a range of 0.6-2.5 can further optimize the abrasion resistance and bubble degree of the glass. Therefore, $BaO/(Na_2O+K_2O+TiO_2)$ is further preferably 0.6-2.5, and even more preferably 0.7-1.5.

$Ln_2O_3$ ($Ln_2O_3$ is one or more of $La_2O_3$, $Gd_2O_3$, $Y_2O_3$, $Yb_2O_3$, and $Lu_2O_3$) is a component that increases the refractive index of glass and is an optional component in the optical glass of this application. By controlling the content of $Ln_2O_3$ to 5% or less, a decrease in the devitrification resistance of the glass can be prevented. Therefore, in this application, the content of $Ln_2O_3$ is 0-5%, preferably 0-3%, and more preferably 0-1%. In some embodiments, it is further preferred that the glass is free of $Ln_2O_3$.

In phosphate glass, the inclusion of $SiO_2$ can make the glass network more compact, enhancing the chemical durability and mechanical strength of the glass. However, the phosphate glass network has poor compatibility with $SiO_2$, and phase separation and precipitation are likely to occur when the $SiO_2$ content is too high. Therefore, in this application, the content of $SiO_2$ is 0-5%, preferably 0-3%, and more preferably 0-1%.

In some embodiments, controlling the ratio of the total content of $SiO_2$, CaO, and ZnO ($SiO_2+CaO+ZnO$) to the content of SrO, that is, $(SiO_2+CaO+ZnO)/SrO$, within the range of 0.3 to 8.0 is beneficial for reducing the coefficient of thermal expansion and density of the glass, and optimizing the climatic resistance of the glass. Therefore, it is preferred that $(SiO_2+CaO+ZnO)/SrO$ is 0.3-8.0, more preferably 0.5-5.0, further preferably 0.6-3.0, and even more preferably 0.7-2.0.

$B_2O_3$ has the effect of improving the thermal stability and meltability of the glass, but when its content is high, the chemical durability and devitrification resistance of the glass decrease. Therefore, in this application, the content of $B_2O_3$ is 0-5%, preferably 0-3%, and more preferably 0-1%. In some embodiments, it is further preferred that the glass is free of $B_2O_3$.

In some embodiments, controlling the ratio of the total content of $Li_2O$, $B_2O_3$, and $TiO_2$ to the content of BaO, that is, $(Li_2O+B_2O_3+TiO_2)/BaO$, within the range of 0.06 to 2.0 can improve the climatic resistance of the glass, prevent an increase in the transition temperature, and facilitate obtaining the desired $P_{g,F}$ value and $\Delta P_{g,F}$ value. Therefore, $(Li_2O+B_2O_3+TiO_2)/BaO$ is preferably 0.06 to 2.0, more preferably 0.07 to 1.5, further more preferably 0.08 to 1.0, and still further more preferably 0.1 to 0.5.

$Al_2O_3$ can improve the chemical durability of the glass, but when its content exceeds 3%, the meltability and optical transmittance of the glass deteriorate. Therefore, in this application the content of $Al_2O_3$ is 0-3%, preferably 0-2%, and more preferably 0-1%. In some embodiments, it is further preferred that the glass is free of $Al_2O_3$.

$WO_3$ is an optional component capable of adjusting the optical constants and devitrification resistance of the glass; however, when its content is high, the transmittance and crystallization resistance of the glass decrease. Therefore, the content of $WO_3$ is 0-3%, preferably 0-2%, and more preferably 0-1%. In some embodiments, it is further preferred that the glass is free of $WO_3$.

In some embodiments, controlling the ratio of the total content of $WO_3$, ZnO, $K_2O$, CaO, and MgO to the content of $TiO_2$, that is, $(WO_3+ZnO+K_2O+CaO+MgO)/TiO_2$, to be 2.0 or less can increase the bubble degree quality of the glass and optimize its abrasion resistance while reducing the glass transition temperature. Therefore, $(WO_3+ZnO+K_2O+CaO+MgO)/TiO_2$ is preferably 2.0 or less, more preferably 0.05 to 1.5, even more preferably 0.1 to 1.0, and still even more preferably 0.2 to 0.8.

In some embodiments, controlling the ratio of the total content of $WO_3$, $K_2O$, $TiO_2$, and $B_2O_3$ to the content of $Nb_2O_5$, that is, $(WO_3+K_2O+TiO_2+B_2O_3)/Nb_2O_5$, within the range of 0.03 to 0.4 can reduce the thermal expansion coefficient of the glass and improve its optical transmittance and chemical durability. Therefore, $(WO_3+K_2O+TiO_2+B2O_3)/Nb_2O_5$ is preferably 0.03 to 0.4, more preferably 0.04 to 0.3, even more preferably 0.05 to 0.25, and still even more preferably 0.06 to 0.15.

An appropriate amount of $ZrO_2$ can increase the mechanical strength and hardness of the glass, improve the devitrification resistance of the glass, and adjust the $P_{g,F}$ value and $\Delta P_{g,F}$ value of the glass. However, $ZrO_2$ is difficult to dissolve in phosphate glass, and excessive amounts can lead to melting difficulties. Therefore, the content of $ZrO_2$ in this application is 0-3%, preferably 0-2%, and more preferably 0-1%. In some embodiments, it is further preferred that the glass is free of $ZrO_2$.

$Bi_2O_3$ can increase the refractive index of the glass, but $Bi_2O_3$ has a high density, which is unfavorable for lightweight glass design. Therefore, the content of $Bi_2O_3$ in this application is 0-3%, preferably 0-2%, and more preferably 0-1%. In some embodiments, it is further preferred that the glass is free of $Bi_2O_3$.

In some embodiments, controlling the ratio of the total content of ZnO, $Li_2O$, $K_2O$, $WO_3$, $B_2O_3$, and $Bi_2O_3$ to the content of SrO, that is, $(ZnO+Li_2O+K_2O+WO_3+B_2O_3+Bi_2O_3)/SrO$, to be 2.0 or less can improve the bubble degree of the glass, optimize the Young's modulus, and prevent a decrease in optical transmittance while maintaining a low thermal expansion coefficient. Therefore, it is preferred that $(ZnO+Li_2O+K_2O+WO_3+B_2O_3+Bi_2O_3)/SrO$ is 2.0 or less, more preferably 1.5 or less, further preferably 1.0 or less, and even more preferably 0.5 or less.

In some embodiments, controlling the ratio of the total content of $Li_2O$, $B_2O_3$, and $Bi_2O_3$ to the content of $TiO_2$, that is, $(Li_2+B_2O_3+Bi_2O_3)/TiO_2$, to be 1.0 or less, is beneficial for reducing the glass density and optimizing its chemical durability, making it easier to achieve the desired $P_{g,F}$ value and $\Delta P_{g,F}$ value while the glass has a lower transition temperature. Therefore, $(Li_2O+B_2O_3+Bi_2O_3)/TiO_2$ is preferably 1.0 or less, more preferably 0.8 or less, even more preferably 0.5 or less, and most preferably 0.2 or less.

In this application, the inclusion of one or more components selected from $Sb_2O_3$, $SnO_2$, and $CeO_2$ at a content of 0-1% as the fining agent can improve the fining effect of the glass and improve the bubble degree of the glass. The content of the fining agent is preferably 0-0.5%, and more preferably 0-0.1%. Due to the reasonable design of the types and content of the components in the optical glass of this application, its bubble degree is excellent; therefore, in some embodiments, it is further preferred that no fining agent is included. When the $Sb_2O_3$ content exceeds 1%, the glass tends to have reduced fining performance, and its strong oxidizing effect promotes the corrosion of platinum or platinum alloy vessels used for glass melting and the deterioration of forming moulds. Therefore, the $Sb_2O_3$ content is preferably 0-1%, more preferably 0-0.5%, even more preferably 0-0.1%, and still even more preferably the glass is free of $Sb_2O_3$. $SnO_2$ can also be used as a fining agent, but when its content exceeds 1%, the coloring tendency of the glass increases, or when the glass is heated, softened, and re-formed by molding, Sn can become a nucleation site, leading to a tendency toward devitrification. Therefore, the $SnO_2$ content of the present application is preferably 0-1%, more preferably 0-0.5%, even more preferably 0-0.1%, and still even more preferably the glass is free of $SnO_2$. The function and content ratio of $CeO_2$ are the same as those of $SnO_2$, and the content of $CeO_2$ is preferably 0-1%, more preferably 0-0.5%, even more preferably 0-0.1%, and still even more preferably the glass is free of $CeO_2$.

Components that should not be contained

In the glass of the present application, oxides of transition metals such as V, Cr, Mn, Fe, Co, Ni, Cu, Ag, and Mo, even if present in small amounts individually or in combination, will cause the glass to be colored and cause absorption at specific wavelengths in the visible light region, thereby weakening the property of improving visible optical transmittance of the present application. Therefore, especially for optical glass for which transmittance in the visible light region is required, it is preferable that such oxides are substantially absent.

Oxides of Th, Cd, Tl, Os, Be, and Se have, in recent years, tended to be subject to controlled use as harmful chemical substances. Environmental protection measures are necessary not only in the glass manufacturing process, but also in the processing process and the disposal after productization. Accordingly, when environmental impact is taken into consideration, it is preferable that such oxides are substantially absent, except for those unavoidably mixed in. As a result, the optical glass becomes substantially free of substances that contaminate the environment. Therefore, even without adopting special environmental protection measures, the optical glass of the present application can be manufactured, processed, and disposed of.

To achieve environmental friendliness, the optical glass of this application preferably does not include $As_2O_3$ and PbO.

The terms "not contain (not include, free of, or the like)" and "0%" as used herein mean that the compound, molecule, or element is not intentionally added as a raw material to the optical glass of this application; however, certain impurities or components that are not intentionally added may exist in the raw materials and/or equipment used in the production of the optical glass, and may be present in small or trace amounts in the final optical glass. This situation is also within the scope of protection of this application.

The properties of the optical glass of this application are described below.

Refractive Index and Abbe Number

**[0068]** The refractive index ($n_d$) and Abbe number ($v_d$) of the optical glass are tested according to the method specified in GB/T 7962.1-2010.

In some embodiments, the lower limit of the refractive index ($n_d$) of the optical glass of this application is 1.82, preferably 1.83, and more preferably 1.84.

In some embodiments, the upper limit of the refractive index ($n_d$) of the optical glass of this application is 1.89, preferably 1.88, and more preferably 1.87.

In some embodiments, the lower limit of the Abbe number ($v_d$) of the optical glass of this application is 18, preferably 20, and more preferably 21.

In some embodiments, the upper limit of the Abbe number ($v_d$) of the optical glass of this application is 26, preferably 25, and more preferably 24.

Coefficient of Thermal Expansion

The coefficient of thermal expansion ($\alpha_{100/300°C}$) of the optical glass is tested within the temperature range of 100-300°C according to the method specified in GB/T 7962.16-2010.

In some embodiments, the coefficient of thermal expansion ($\alpha_{100/300°C}$) of the optical glass of this application is $100 \times 10^{-7}$/K or less, preferably $95 \times 10^{-7}$/K or less, and more preferably $90 \times 10^{-7}$/K or less.

Acid Resistance Durability

The acid resistance durability ($D_A$) of the optical glass (powder method) is tested according to the method specified in GB/T 17129.

In some embodiments, the acid resistance durability ($D_A$) of the optical glass of the present application is class 2 or better, preferably class 1.

Water Resistance Durability

The water resistance durability ($D_W$) of the optical glass (powder method) is tested according to the method specified in GB/T 17129.

In some embodiments, the water resistance durability ($D_W$) of the optical glass of the present application is class 2 or better, preferably class 1.

Relative Partial Dispersion and Anomalous Partial Dispersion Value

The origin of relative partial dispersion ($P_{g,F}$) and anomalous partial dispersion value ($\Delta P_{g,F}$) is explained by the following formulas.

The relative partial dispersion for wavelengths x and y is expressed by the following equation (1):

$$P_{x,y} = (n_x - n_y) / (n_F - n_C) \qquad (1)$$

According to the Abbe number formula, for most so-called "normal glass" (H-K6 and F4 are selected as examples of "normal glass" below), the following equation (2) holds true:

$$P_{x,y} = m_{x,y} \cdot v_d + b_{x,y} \qquad (2)$$

This linear relationship is expressed with $P_{x,y}$ as the ordinate and $v_d$ as the abscissa, wherein $m_{x,y}$ is the slope and $b_{x,y}$ is the intercept.

As is well known, the correction of secondary spectrum, i.e., achieving achromatization for more than two wavelengths, requires at least one type of glass that does not conform to the aforementioned equation (2) (i.e., its $P_{x,y}$ value deviates from the Abbe empirical formula). The deviation value is denoted by $\Delta P_{g,F}$. Thus, each $P_{x,y}$-$v_d$ point is shifted by an amount of $\Delta P_{x,y}$ relative to the "normal line" defined by the above equation (2). The $\Delta P_{x,y}$ value for each glass can be calculated using the following equation (3):

$$P_{x,y} = m_{x,y} \cdot v_d + bx,y + \Delta P_{x,y} \qquad (3)$$

Therefore, $\Delta P_{x,y}$ quantitatively represents the deviation characteristics of the special dispersion compared to "normal glass".

Therefore, from the above, the calculation formulas for the relative partial dispersion ($P_{g,F}$) and the anomalous partial dispersion value ($\Delta P_{g,F}$) can be derived as equations (4) and (5) below:

$$P_{g,F} = (n_g - n_F) / (n_F - n_C) \qquad (4)$$

$$\Delta P_{g,F} = P_{g,F} - 0.6457 + 0.001703 v_d \qquad (5)$$

In some embodiments, the relative partial dispersion ($P_{g,F}$) of the optical glass in the present application is 0.58 to 0.72, preferably 0.60 to 0.68, and more preferably 0.62 to 0.65.

In some embodiments, the anomalous partial dispersion value ($\Delta P_{g,F}$) of the optical glass in the present application is 0.08 or less, preferably 0.005 to 0.06, and more preferably 0.01 to 0.04.

Transition Temperature

The transition temperature ($T_g$) of the optical glass is tested according to the method specified in GB/T7962.16-2010.

In some embodiments, the transition temperature ($T_g$) of the optical glass in the present application is 670°C or less, preferably 660°C or less, and more preferably 650°C or less.

Abrasion Resistance

The abrasion resistance ($F_A$) of the optical glass is the value obtained by multiplying the ratio of the wear amount of the tested sample to the wear amount (volume) of the standard sample (H-K9 glass) by 100 under completely identical conditions, expressed by the following equation:

$$F_A = V/V_0 \times 100 = (W/\rho) / (W_0/\rho_0) \times 100;$$

wherein: V-volume wear amount of the tested sample;
$V_0$-volume wear amount of the standard sample;
W-mass wear amount of the tested sample;
$W_0$-mass wear amount of the standard sample;
$\rho$-density of the tested sample; and

$\rho_0$-density of the standard sample.

In some embodiments, the lower limit of the abrasion resistance ($F_A$) of the optical glass in the present application is 250, preferably 260, and more preferably 265.

In some embodiments, the upper limit of the abrasion resistance ($F_A$) of the optical glass in the present application is 290, preferably 285, and more preferably 280.

Density

The density ($\rho$) is tested according to the method specified in GB/T7962.20-2010.

In some embodiments, the density ($\rho$) of the optical glass in the present application is 4.00 g/cm$^3$ or less, preferably 3.90 g/cm$^3$ or less, and more preferably 3.80 g/cm$^3$ or less.

Coloration

The short-wave transmission spectral characteristics of the glass in the present application are expressed by coloration ($\lambda_{70}$ and $\lambda_5$). $\lambda_{70}$ refers to the wavelength at which the glass transmittance reaches 70%. The determination of $\lambda_{70}$ is performed using the glass having a thickness of 10 $\pm$ 0.1 mm and having two opposite planes parallel to each other and optical polished, by measuring the spectral transmittance in the wavelength region from 280 nm to 700 nm and identifying the wavelength that exhibits 70% transmittance. The spectral transmittance, or transmittance, is a quantity expressed by the ratio $I_{out}/I_{in}$ when light of intensity $I_{in}$ is incident perpendicularly to the surface of the glass, passes through the glass, and emerges from the other surface with intensity $I_{out}$. This quantity also includes surface reflection losses at the glass surfaces. The higher the refractive index of the glass, the greater the surface reflection loss. Therefore, in high-refractive-index glass, a small $\lambda_{70}$ value indicates that the glass itself has extremely low coloration and high light transmittance.

In some embodiments, the $\lambda_{70}$ of the optical glass in the present application is 430 nm or less, preferably 420 nm or less, and more preferably 410 nm or less.

In some embodiments, the $\lambda_5$ of the optical glass in the present application is 400 nm or less, preferably 390 nm or less, and more preferably 380 nm or less.

Climatic Resistance

The testing method for the climatic resistance (CR) of the optical glass is as follows. The sample is placed in a test chamber with a saturated water vapor environment at a relative humidity of 90%, and the temperature is alternately cycled between 40 and 50°C every 1 hour for a total of 15 cycles. The climatic resistance category is determined based on the change in haze before and after the sample is placed in the test chamber. The climatic resistance classification is shown in Table 1.

Table 1

| Class | 1 | 2 | 3 | 4 | | |
|---|---|---|---|---|---|---|
| | | | | a | b | c |
| Increase in haze $\Delta H$(%) | < 0.3 | 0.3-1.0 | 1.0-2.0 | 2.0-4.0 | 4.0-6.0 | ≥6.0 |

In some embodiments, the climatic resistance (CR) of the optical glass in the present application is class 2 or higher, preferably class 1.

Young's Modulus

Young's modulus (E) is calculated by measuring the longitudinal wave velocity and transverse wave velocity using ultrasonic testing, and then using the following equation:

$$E = \frac{4G^2 - 3G V_T^2 \rho}{G - V_T^2 \rho}$$

$$G = V_s^{2} \rho$$

Wherein: E is Young's modulus, the unit is Pa;
G is the shear modulus, the unit is Pa;
$V_T$ is the transverse wave velocity, the unit is m/s;
$V_S$ is the longitudinal wave velocity, the unit is m/s; and
$\rho$ is the glass density, the unit is g/cm$^3$.

In some embodiments, the Young's modulus (E) of the optical glass in the present application is $8000 \times 10^7$ Pa or higher, preferably $8500 \times 10^7$ Pa or higher, and more preferably $9000 \times 10^7$ Pa or higher.

Bubble Degree

The bubble degree of the optical glass is tested according to the method specified in GB/T7962.8-2010.
In some embodiments, the bubble degree of the optical glass in the present application is Grade A or better, preferably Grade $A_0$ or better, and more preferably Grade $A_{00}$.

Manufacturing Method of Optical Glass

The manufacturing method of the optical glass of the present application is as follows. The glass of the present application is produced using conventional raw materials and processes, including but not limited to using oxides, hydroxides, complex salts (such as carbonates, nitrates, sulfates, phosphates, metaphosphates, etc.), boric acid, etc., as raw materials. After preparing the batch according to conventional methods, the prepared batch is fed into a melting furnace (such as a platinum or platinum alloy crucible) at 1050-1250°C, preferably 1100-1200°C, for melting. After fining and homogenization, a homogeneous molten glass free of bubbles and undissolved substances is obtained. This molten glass is then cast in a mold and annealed. Those skilled in the art can appropriately select the raw materials, process methods, and process parameters according to actual needs.

Glass Preforms and Optical Elements

Glass preforms can be produced from the prepared optical glass using methods such as direct droplet forming, grinding, or press-forming methods including hot press forming. That is, glass precision preforms may be produced by directly performing precision droplet forming on molten optical glass, or glass preforms may be produced by subjecting a preform blank made of optical glass for press forming to reheating press forming followed by grinding. It should be noted that the methods for producing glass preforms are not limited to the above methods.
As described above, the optical glass of the present application is useful for various optical elements and optical designs. In particular, preform blanks formed from the optical glass of the present application are especially preferred, which can be used for reheating press forming, precision press forming, and the like to produce optical elements such as lenses and prisms.
Both the glass preforms and optical elements of the present application are formed from the optical glass of the present application. The glass preforms of the present application possess the excellent properties of the optical glass; the optical elements of the present application possess the excellent properties of the optical glass and can provide various lenses, prisms, and other optical elements with high optical value.
Examples of lenses include various lenses having spherical or aspherical surfaces, such as concave meniscus lenses, convex meniscus lenses, biconvex lenses, biconcave lenses, plano-convex lenses, and plano-concave lenses.

Optical Instruments

The optical elements formed from the optical glass of the present application can be used to manufacture optical instruments such as photographic equipment, video equipment, projection equipment, display equipment, in-vehicle equipment, and monitoring equipment.

Examples

Optical Glass Examples

To further clarify and illustrate the technical solution of the present application, the following non-limiting examples are provided.

In this example, optical glass having the components shown in Tables 2-4 was obtained using the above-described method for manufacturing optical glass. In addition, the properties of each glass were measured using the test methods described in the present application, and the measurement results are shown in Tables 2-4.

Table 2

| Examples (wt%) | 1# | 2# | 3# | 4# | 5# | 6# | 7# |
|---|---|---|---|---|---|---|---|
| $P_2O_5$ | 21.33 | 24.26 | 32 | 30.06 | 22.53 | 23.43 | 31.25 |
| $Nb_2O_5$ | 40.69 | 37.1 | 43.36 | 41.66 | 45.76 | 50.74 | 43.12 |
| $TiO_2$ | 10.25 | 8.32 | 3.21 | 1.65 | 4.12 | 2.5 | 6.31 |
| BaO | 16.15 | 15.22 | 4.9 | 6.37 | 7.45 | 8.25 | 6.63 |
| CaO | 2.21 | 6.04 | 5.12 | 0.86 | 1.19 | 4 | 3.11 |
| MgO | 0 | 1.22 | 0 | 0 | 0 | 0 | 0 |
| SrO | 2.32 | 4.25 | 3.03 | 5.57 | 1.82 | 5.21 | 3.42 |
| ZnO | 1.12 | 0 | 0 | 0 | 0.5 | 0 | 0.25 |
| $Li_2O$ | 0.5 | 0 | 1.24 | 0 | 0 | 0.8 | 0 |
| $Na_2O$ | 3.25 | 2.77 | 5.74 | 11.23 | 13.05 | 4.28 | 5.33 |
| $K_2O$ | 0 | 0.5 | 0 | 1.3 | 0 | 0.24 | 0 |
| $La_2O_3$ | 0 | 0 | 0 | 0 | 0.33 | 0 | 0 |
| $Gd_2O_3$ | 0 | 0 | 0 | 0 | 0.6 | 0 | 0 |
| $Y_2O_3$ | 1 | 0 | 0 | 0 | 0 | 0 | 0 |
| $Yb_2O_3$ | 0 | 0 | 0 | 0 | 0 | 0 | 0 |
| $Lu_2O_3$ | 0 | 0 | 0 | 0 | 0 | 0 | 0 |
| $SiO_2$ | 0.23 | 0.1 | 0 | 1 | 0.35 | 0 | 0.08 |
| $B_2O_3$ | 0.6 | 0 | 1.3 | 0 | 0 | 0 | 0 |
| $Al_2O_3$ | 0 | 0 | 0 | 0 | 0 | 0 | 0 |
| $WO_3$ | 0.3 | 0 | 0 | 0.2 | 0 | 0 | 0.5 |
| $ZrO_2$ | 0 | 0.22 | 0 | 0 | 1 | 0 | 0 |
| $Bi_2O_3$ | 0 | 0 | 0 | 0 | 1.3 | 0.45 | 0 |
| $Sb_2O_3$ | 0.05 | 0 | 0.1 | 0.1 | 0 | 0 | 0 |
| $SnO_2$ | 0 | 0 | 0 | 0 | 0 | 0.1 | 0 |
| $CeO_2$ | 0 | 0 | 0 | 0 | 0 | 0 | 0 |
| Total | 100 | 100 | 100 | 100 | 100 | 100 | 100 |
| $(ZnO+Li_2O+K_2O+WO_3+B_2O_3+Bi_2O_3)/SrO$ | 1.09 | 0.12 | 0.84 | 0.27 | 0.99 | 0.29 | 0.22 |
| $(Li_2O+B_2O_3+Bi_2O_3)/TiO_2$ | 0.11 | 0 | 0.79 | 0 | 0.32 | 0.50 | 0 |
| $SrO/TiO_2$ | 0.23 | 0.51 | 0.94 | 3.38 | 0.44 | 2.08 | 0.54 |
| $BaO/(Na_2O+K_2O+TiO_2)$ | 1.20 | 1.31 | *0.55* | 0.45 | 0.43 | 1.18 | 0.57 |
| $Nb_2O_5/P_2O_5$ | 1.91 | 1.53 | 1.36 | 1.39 | 2.03 | 2.17 | 1.38 |
| $(SiO_2+CaO+ZnO)/SrO$ | 1.53 | 1.44 | 1.69 | 0.33 | 1.12 | 0.77 | 1.01 |
| $(WO_3+ZnO+K_2O+CaO+MgO)/TiO_2$ | 0.35 | 0.93 | 1.60 | 1.43 | 0.41 | 1.70 | 0.61 |
| $(WO_3+K_2O+TiO_2+B_2O_3)/Nb_2O_5$ | 0.27 | 0.24 | 0.10 | 0.08 | 0.09 | 0.05 | 0.16 |

(continued)

| Examples (wt%) | 1# | 2# | 3# | 4# | 5# | 6# | 7# |
|---|---|---|---|---|---|---|---|
| $Na_2O/BaO$ | 0.20 | 0.18 | 1.17 | 1.76 | 1.75 | 0.52 | 0.80 |
| $BaO/P_2O_5$ | 0.76 | 0.63 | 0.15 | 0.21 | 0.33 | 0.35 | 0.21 |
| $(Li_2O+B_2O_3+TiO_2)/BaO$ | 0.70 | 0.55 | 1.17 | 0.26 | 0.55 | 0.40 | 0.95 |
| $TiO_2/CaO$ | 4.64 | 1.38 | 0.63 | 1.92 | 3.46 | 0.63 | 2.03 |
| $n_d$ | 1.86762 | 1.83453 | 1.84336 | 1.82463 | 1.85462 | 1.87638 | 1.84638 |
| $\nu_d$ | 20.42 | 24.65 | 23.72 | 25.47 | 21.37 | 19.46 | 23.05 |
| $\alpha_{100/300°C}$ $(\times 10^{-7}/K)$ | 96 | 93 | 97 | 95 | 92 | 91 | 85 |
| $D_A$ | Class 2 | Class 2 | Class 2 | Class 2 | Class 1 | Class 1 | Class 1 |
| $D_W$ | Class 1 | Class 1 | Class 2 | Class 1 | Class 1 | Class 1 | Class 1 |
| $P_{g,F}$ | 0.6507 | 0.6485 | 0.6925 | 0.6725 | 0.6671 | 0.6537 | 0.6521 |
| $\Delta P_{g,F}$ | 0.0513 | 0.0437 | 0.0633 | 0.0546 | 0.0524 | 0.0515 | 0.0507 |
| $T_g(°C)$ | 655 | 660 | 652 | 638 | 635 | 650 | 651 |
| $F_A$ | 268 | 264 | 286 | 284 | 281 | 282 | 280 |
| $E (\times 10^7 Pa)$ | 8915 | 9105 | 8637 | 8765 | 8976 | 8838 | 9032 |
| $\rho$ $(g/cm^3)$ | 3.76 | 3.73 | 3.83 | 3.81 | 3.80 | 3.80 | 3.81 |
| $\lambda_{70}$ (nm) | 420 | 412 | 413 | 410 | 415 | 418 | 411 |
| $\lambda_5$ (nm) | 390 | 383 | 384 | 381 | 386 | 388 | 382 |
| CR | Class 1 | Class 1 | Class 1 | Class 1 | Class 1 | Class 1 | Class 1 |
| Bubble Degree (Grade) | $A_0$ | $A_{00}$ | A | A | A | $A_0$ | $A_0$ |

Table 3

| Examples (wt%) | 8# | 9# | 10# | 11# | 12# | 13# | 14# |
|---|---|---|---|---|---|---|---|
| $P_2O_5$ | 29.05 | 25.27 | 28.18 | 29.32 | 26.55 | 27.16 | 28.32 |
| $Nb_2O_5$ | 41.62 | 44.4 | 45.6 | 43.31 | 49.36 | 47.73 | 42.74 |
| $TiO_2$ | 7.24 | 3.56 | 4.62 | 5.33 | 5.18 | 4.23 | 5.07 |
| BaO | 8.33 | 8.32 | 10.25 | 11.42 | 9.45 | 11.84 | 12.26 |
| CaO | 2.15 | 4.25 | 1.62 | 1.55 | 2.07 | 2.83 | 1.92 |
| MgO | 0 | 0 | 0 | 0 | 0 | 0 | 0 |
| SrO | 3.12 | 2.25 | 0.83 | 0.25 | 1.22 | 0.95 | 1.36 |
| ZnO | 0 | 0.33 | 0 | 0 | 0 | 0 | 0 |
| $Li_2O$ | 0 | 0 | 0 | 0 | 0 | 0 | 0 |
| $Na_2O$ | 6.34 | 9.22 | 7.35 | 8.82 | 6.17 | 5.26 | 8.33 |
| $K_2O$ | 0 | 0 | 0 | 0 | 0 | 0 | 0 |
| $La_2O_3$ | 1.15 | 0 | 0 | 0 | 0 | 0 | 0 |
| $Gd_2O_3$ | 0 | 0 | 0 | 0 | 0 | 0 | 0 |
| $Y_2O_3$ | 0 | 0.6 | 0 | 0 | 0 | 0 | 0 |
| $Yb_2O_3$ | 0 | 0 | 0 | 0 | 0 | 0 | 0 |
| $Lu_2O_3$ | 0 | 0 | 0 | 0 | 0 | 0 | 0 |
| $SiO_2$ | 0 | 1 | 0 | 0 | 0 | 0 | 0 |

(continued)

| Examples (wt%) | 8# | 9# | 10# | 11# | 12# | 13# | 14# |
|---|---|---|---|---|---|---|---|
| $B_2O_3$ | 0 | 0.25 | 0 | 0 | 0 | 0 | 0 |
| $AL_2O_3$ | 0 | 0.55 | 1 | 0 | 0 | 0 | 0 |
| $WO_3$ | 0 | 0 | 0 | 0 | 0 | 0 | 0 |
| $ZrO_2$ | 0 | 0 | 0.5 | 0 | 0 | 0 | 0 |
| $Bi_2O_3$ | 0.8 | 0 | 0 | 0 | 0 | 0 | 0 |
| $Sb_2O_3$ | 0 | 0 | 0 | 0 | 0 | 0 | 0 |
| $SnO_2$ | 0.2 | 0 | 0.05 | 0 | 0 | 0 | 0 |
| $CeO_2$ | 0 | 0 | 0 | 0 | 0 | 0 | 0 |
| Total | 100 | 100 | 100 | 100 | 100 | 100 | 100 |
| $(ZnO+Li_2O+K_2O+WO_3+B_2O_3+Bi_2O_3)/SrO$ | 0.26 | 0.26 | 0 | 0 | 0 | 0 | 0 |
| $(Li_2O+B_2O_3+Bi_2O_3)/TiO_2$ | 0.11 | 0.07 | 0 | 0 | 0 | 0 | 0 |
| $SrO/TiO_2$ | 0.43 | 0.63 | 0.18 | 0.05 | 0.24 | 0.22 | 0.27 |
| $BaO/(Na_2O+K_2O+TiO_2)$ | 0.61 | 0.65 | 0.86 | 0.81 | 0.83 | 1.25 | 0.91 |
| $Nb_2O_5/P_2O_5$ | 1.43 | 1.76 | 1.62 | 1.48 | 1.86 | 1.76 | 1.51 |
| $(SiO_2+CaO+ZnO)/SrO$ | 0.69 | 2.48 | 1.95 | 6.20 | 1.70 | 2.98 | 1.41 |
| $(WO_3+ZnO+K_2O+CaO+MgO)/TiO_2$ | 0.30 | 1.29 | 0.35 | 0.29 | 0.40 | 0.67 | 0.38 |
| $(WO_3+K_2O+TiO_2+B_2O_3)/Nb_2O_5$ | 0.17 | 0.09 | 0.10 | 0.12 | 0.10 | 0.09 | 0.12 |
| $Na_2O/BaO$ | 0.76 | 1.11 | 0.72 | 0.77 | 0.65 | 0.44 | 0.68 |
| $BaO/P_2O_5$ | 0.29 | 0.33 | 0.36 | 0.39 | 0.36 | 0.44 | 0.43 |
| $(Li_2O+B_2O_3+TiO_2)/BaO$ | 0.87 | 0.46 | 0.45 | 0.47 | 0.55 | 0.36 | 0.41 |
| $TiO_2/CaO$ | 3.37 | 0.84 | 2.85 | 3.44 | 2.50 | 1.49 | 2.64 |
| $n_d$ | 1.84368 | 1.83854 | 1.85862 | 1.85063 | 1.88435 | 1.86348 | 1.85164 |
| $v_d$ | 22.75 | 23.46 | 22.57 | 23.16 | 18.52 | 21.47 | 22.95 |
| $\alpha_{100/300°C}$ ($\times 10^{-7}/K$) | 87 | 91 | 86 | 85 | 87 | 85 | 83 |
| $D_A$ | Class 1 | Class 1 | Class 1 | Class 1 | Class 1 | Class 1 | Class 1 |
| $D_W$ | Class 1 | Class 1 | Class 1 | Class 1 | Class 1 | Class 1 | Class 1 |
| $P_{g,F}$ | 0.6522 | 0.6214 | 0.6238 | 0.6082 | 0.6308 | 0.6325 | 0.6275 |
| $\Delta P_{g,F}$ | 0.0513 | 0.0175 | 0.0204 | 0.0136 | 0.0247 | 0.0236 | 0.0213 |
| $T_g(°C)$ | 645 | 640 | 643 | 641 | 642 | 648 | 642 |
| $F_A$ | 273 | 281 | 268 | 270 | 272 | 274 | 270 |
| $E \times 10^7Pa)$ | 9052 | 9065 | 9210 | 9083 | 9124 | 9113 | 9227 |
| $\rho$ (g/cm$^3$) | 3.77 | 3.81 | 3.75 | 3.83 | 3.72 | 3.81 | 3.70 |
| $\lambda_{70}$ (nm) | 408 | 407 | 403 | 400 | 402 | 405 | 404 |
| $\lambda_5$ (nm) | 380 | 378 | 375 | 370 | 371 | 375 | 375 |
| CR | Class 1 | Class 1 | Class 1 | Class 1 | Class 1 | Class 1 | Class 1 |
| Bubble Degree (Grade) | $A_{00}$ | $A_0$ | $A_{00}$ | $A_{00}$ | $A_{00}$ | $A_{00}$ | $A_{00}$ |

Table 4

| Examples (wt%) | 15# | 16# | 17# | 18# | 19# | 20# | 21# |
|---|---|---|---|---|---|---|---|
| $P_2O_5$ | 29.14 | 27.25 | 27.12 | 27.37 | 26.36 | 28.14 | 27.51 |
| $Nb_2O_5$ | 42.97 | 40.86 | 44.15 | 43.68 | 46.09 | 44.74 | 48.1 |
| $TiO_2$ | 6.25 | 4.14 | 4.72 | 5.11 | 6.06 | 7.12 | 5.21 |
| BaO | 10.43 | 14.05 | 13.32 | 12.43 | 11.76 | 7.24 | 8.23 |
| CaO | 1.73 | 2.54 | 2.01 | 1.88 | 1.35 | 2.26 | 1.64 |
| MgO | 0 | 0 | 0 | 0 | 0 | 0 | 0 |
| SrO | 2.24 | 2.13 | 1.25 | 1.47 | 1.06 | 1.38 | 1.53 |
| ZnO | 0 | 0 | 0 | 0 | 0 | 0 | 0 |
| $Li_2O$ | 0 | 0 | 0 | 0 | 0 | 0 | 0 |
| $Na_2O$ | 7.24 | 9.03 | 7.43 | 8.06 | 7.32 | 9.12 | 7.78 |
| $K_2O$ | 0 | 0 | 0 | 0 | 0 | 0 | 0 |
| $La_2O_3$ | 0 | 0 | 0 | 0 | 0 | 0 | 0 |
| $Gd_2O_3$ | 0 | 0 | 0 | 0 | 0 | 0 | 0 |
| $Y_2O_3$ | 0 | 0 | 0 | 0 | 0 | 0 | 0 |
| $Yb_2O_3$ | 0 | 0 | 0 | 0 | 0 | 0 | 0 |
| $Lu_2O_3$ | 0 | 0 | 0 | 0 | 0 | 0 | 0 |
| $SiO_2$ | 0 | 0 | 0 | 0 | 0 | 0 | 0 |
| $B_2O_3$ | 0 | 0 | 0 | 0 | 0 | 0 | 0 |
| $Al_2O_3$ | 0 | 0 | 0 | 0 | 0 | 0 | 0 |
| $WO_3$ | 0 | 0 | 0 | 0 | 0 | 0 | 0 |
| $ZrO_2$ | 0 | 0 | 0 | 0 | 0 | 0 | 0 |
| $Bi_2O_3$ | 0 | 0 | 0 | 0 | 0 | 0 | 0 |
| $Sb_2O_3$ | 0 | 0 | 0 | 0 | 0 | 0 | 0 |
| $SnO_2$ | 0 | 0 | 0 | 0 | 0 | 0 | 0 |
| $CeO_2$ | 0 | 0 | 0 | 0 | 0 | 0 | 0 |
| Total | 100 | 100 | 100 | 100 | 100 | 100 | 100 |
| $(ZnO+Li_2O+K_2O+WO_3+B_2O_3+Bi_2O_3)/SrO$ | 0 | 0 | 0 | 0 | 0 | 0 | 0 |
| $(Li_2O+B_2O_3+Bi_2O_3)/TiO_2$ | 0 | 0 | 0 | 0 | 0 | 0 | 0 |
| $SrO/TiO_2$ | 0.36 | 0.51 | 0.26 | 0.29 | 0.17 | 0.19 | 0.29 |
| $BaO/(Na_2O+K_2O+TiO_2)$ | 0.77 | 1.07 | 1.10 | 0.94 | 0.88 | 0.45 | 0.63 |
| $Nb_2O_5/P_2O_5$ | 1.47 | 1.50 | 1.63 | 1.60 | 1.75 | 1.59 | 1.75 |
| $(SiO_2+CaO+ZnO)/SrO$ | 0.77 | 1.19 | 1.61 | 1.28 | 1.27 | 1.64 | 1.07 |
| $(WO_3+ZnO+K_2O+CaO+MgO)/TiO_2$ | 0.28 | 0.61 | 0.43 | 0.37 | 0.22 | 0.32 | 0.31 |
| $(WO_3+K_2O+TiO_2+B_2O_3)/Nb_2O_5$ | 0.15 | 0.10 | 0.11 | 0.12 | 0.13 | 0.16 | 0.11 |
| $Na_2O/BaO$ | 0.69 | 0.64 | 0.56 | 0.65 | 0.62 | 1.26 | 0.95 |
| $BaO/P_2O_5$ | 0.36 | 0.52 | 0.49 | 0.45 | 0.45 | 0.26 | 0.30 |
| $(Li_2O+B_2O_3+TiO_2)/BaO$ | 0.60 | 0.29 | 0.35 | 0.41 | 0.52 | 0.98 | 0.63 |
| $TiO_2/CaO$ | 3.61 | 1.63 | 2.35 | 2.72 | 4.49 | 3.15 | 3.18 |

(continued)

| Examples (wt%) | 15# | 16# | 17# | 18# | 19# | 20# | 21# |
|---|---|---|---|---|---|---|---|
| $n_d$ | 1.85834 | 1.83375 | 1.85635 | 1.85762 | 1.85835 | 1.86124 | 1.86284 |
| $\nu_d$ | 22.06 | 23.85 | 22.42 | 22.36 | 22.34 | 22.73 | 21.46 |
| $\alpha_{100/300°C}$ ($\times 10^{-7}$/K) | 86 | 88 | 85 | 84 | 86 | 90 | 84 |
| $D_A$ | Class 1 | Class 1 | Class 1 | Class 1 | Class 1 | Class 1 | Class 1 |
| $D_W$ | Class 1 | Class 1 | Class 1 | Class 1 | Class 1 | Class 1 | Class 1 |
| $P_{g,F}$ | 0.6501 | 0.6324 | 0.6317 | 0.6285 | 0.6411 | 0.6427 | 0.6408 |
| $\Delta P_{g,F}$ | 0.0411 | 0.0252 | 0.0238 | 0.0223 | 0.0317 | 0.0326 | 0.0304 |
| $T_g$(°C) | 646 | 644 | 645 | 642 | 641 | 640 | 647 |
| $F_A$ | 274 | 273 | 272 | 275 | 271 | 280 | 275 |
| E ($\times 10^7$Pa) | 9075 | 9120 | 9235 | 9110 | 9108 | 9173 | 9125 |
| $\rho$ (g/cm$^3$) | 3.72 | 3.72 | 3.75 | 3.74 | 3.72 | 3.75 | 3.74 |
| $\lambda_{70}$ (nm) | 406 | 405 | 402 | 401 | 404 | 410 | 405 |
| $\lambda_5$ (nm) | 376 | 373 | 373 | 371 | 372 | 380 | 374 |
| CR | Class 1 | Class 1 | Class 1 | Class 1 | Class 1 | Class 1 | Class 1 |
| Bubble Degree (Grade) | $A_{00}$ | $A_{00}$ | $A_{00}$ | $A_{00}$ | $A_{00}$ | $A_0$ | $A_{00}$ |

Glass Preform Examples

The glass obtained from Examples 1-21 of the optical glass is processed by methods such as grinding, or by press-forming methods including reheating press forming and precision press forming, to produce preforms of various lenses, prisms, and the like, such as concave meniscus lenses, convex meniscus lenses, biconvex lenses, biconcave lenses, plano-convex lenses, and plano-concave lenses.

Optical Element Examples

The preforms obtained in above glass preform examples are annealed to reduce internal stress in the glass while fine-tuning the refractive index, such that the refractive index and other optical properties reach the desired values.
Subsequently, each preform is subjected to grinding and polishing to produce various lenses and prisms, such as concave meniscus lenses, convex meniscus lenses, biconvex lenses, biconcave lenses, plano-convex lenses, and plano-concave lenses. An antireflection coating may further be applied to surfaces of the obtained optical elements.

Optical Instrument Examples

The optical elements obtained in above optical element examples are optically designed and combined by using one or more optical elements to form optical parts or optical assemblies, which can be used, for example, in imaging devices, sensors, microscopes, medical technology, digital projection, communications, optical communication technology/information transmission, optics/lighting in the automotive field, photolithography, excimer lasers, wafers, computer chips, and integrated circuits and electronic devices including such circuits and chips.

**Claims**

1.  An optical glass, comprising following components in percentage by weight:

P$_2$O$_5$: 20-35%;
Nb$_2$O$_5$: 37-55%;
TiO$_2$: 1-12%;
BaO: 4-19%; and
Na$_2$O: 0.5-14%.

2. The optical glass according to claim 1, further comprising following components in percentage by weight: CaO: 0-8%; and/or MgO: 0-5%; and/or SrO: 0-8%; and/or ZnO: 0-5%; and/or $Li_2O$: 0-5%; and/or $K_2O$: 0-5%; and/or $Ln_2O_3$: 0-5%; and/or $SiO_2$: 0-5%; and/or $B_2O_3$: 0-5%; and/or $Al_2O_3$: 0-3%; and/or $WO_3$: 0-3%; and/or $ZrO_2$: 0-5%; and/or $Bi_2O_3$: 0-3%; and/or a fining agent: 0-1%,

   wherein $Ln_2O_3$ is one or more of $La_2O_3$, $Gd_2O_3$, $Y_2O_3$, $Yb_2O_3$, and $Lu_2O_3$, and the fining agent is one or more of $Sb_2O_3$, $SnO_2$, and $CeO_2$.

3. An optical glass, comprising following components in percentage by weight:

   $P_2O_5$: 20-35%; $Nb_2O_5$: 37-55%; $TiO_2$: 1-12%; BaO: 4-19%; $Na_2O$: 0.5-14%; CaO: 0-8%; MgO: 0-5%; SrO: 0-8%; ZnO: 0-5%; $Li_2O$: 0-5%; $K_2O$: 0-5%; $Ln_2O_3$: 0-5%; $SiO_2$: 0-5%; $B_2O_3$: 0-5%; $Al_2O_3$: 0-3%; $WO_3$: 0-3%; $ZrO_2$: 0-5%; $Bi_2O_3$: 0-3%; a fining agent: 0-1%,
   wherein $Ln_2O_3$ is one or more of $La_2O_3$, $Gd_2O_3$, $Y_2O_3$, $Yb_2O_3$, and $Lu_2O_3$, and the fining agent is one or more of $Sb_2O_3$, $SnO_2$, and $CeO_2$.

4. The optical glass according to anyone of claims 1 to 3, the components expressed in percentage by weight, satisfying one or more of following 12 conditions:

   1) $(ZnO+Li_2O+K_2O+WO_3+B_2O_3+Bi_2O_3)/SrO$ being 2.0 or less, preferably being 1.5 or less, preferably being 1.0 or less, preferably being 0.5 or less;
   2) $(Li_2O+B_2O_3+Bi_2O_3)/TiO_2$ being 1.0 or less, preferably being 0.8 or less, preferably being 0.5 or less, preferably being 0.2 or less;
   3) $SrO/TiO_2$ being 0.01 to 5.0, preferably being 0.01 to 2.0 or less, preferably being 0.05 to 1.0 or less, preferably being 0.1 to 0.7 or less;
   4) $BaO/(Na_2O+K_2O+TiO_2)$ being 0.4 to 5.0, preferably being 0.5 to 3.0 or less, preferably being 0.6 to 2.5 or less, preferably being 0.7 to 1.5 or less;
   5) $Nb_2O_5/P_2O_5$ being 1.3 to 2.7, preferably being 1.4 to 2.5 or less, preferably being 1.5 to 2.2 or less, preferably being 1.6 to 2.0 or less;
   6) $(SiO_2+CaO+ZnO)/SrO$ being 0.3 to 8.0, preferably being 0.5 to 5.0 or less, preferably being 0.6 to 3.0 or less, preferably being 0.7 to 2.0 or less;
   7) $(WO_3+ZnO+K_2O+CaO+MgO)/TiO_2$ being 2.0 or less, preferably being 0.05 to 1.5 or less preferably being 0.1 to 1.0 or less, preferably being 0.2 to 0.8 or less;
   8) $(WO_3+K_2O+TiO_2+B_2O_3)/Nb_2O_5$ being 0.03 to 0.4, preferably being 0.04 to 0.3 or less preferably being 0.05 to 0.25 or less, preferably being 0.06 to 0.15 or less;
   9) $Na_2O/BaO$ being 0.05 to 2.0, preferably being 0.1 to 1.5 or less, preferably being 0.2 to 1.0 or less, preferably being 0.4 to 0.9 or less;
   10) $BaO/P_2O_5$ being 0.15 to 0.9, preferably being 0.25 to 0.8 or less, preferably being 0.3 to 0.7 or less, preferably being 0.35 to 0.6 or less;
   11) $(Li_2O+B_2O_3+TiO_2)/BaO$ being 0.06 to 2.0, preferably being 0.07 to 1.5 or less, preferably being 0.08 to 1.0 or less, preferably being 0.1 to 0.5 or less;
   12) $TiO_2/CaO$ being 0.4 to 10.0, preferably being 0.8 to 8.0 or less, preferably being 1.0 to 6.0 or less, preferably being 1.2 to 5.0 or less.

5. The optical glass according to anyone of claims 1 to 3, the components expressed in percentage by weight, comprising: $P_2O_3$: 22-32%, preferably being 25-30%; and/or $Nb_2O_5$: 41-52%, preferably being 43-50%; and/or $TiO_2$: 2-10%, preferably being 3-7%; and/or BaO: 6-16.5%, preferably being 10-15%; and/or $Na_2O$: 2-12%, preferably being 5-10%; and/or CaO: greater than 0 but less than or equal to 6%, preferably being 1-4%; and/or MgO: 0-3%, preferably being 0-1%; and/or SrO: greater than 0 but less than or equal to 5%, preferably being 0.5-3%; and/or ZnO: 0-3%, preferably being 0-1%; and/or $Li_2O$: 0-3%, preferably being 0-1%; and/or $K_2O$: 0-3%, preferably being 0-1%; and/or $Ln_2O_3$: 0-3%, preferably being 0-1%; and/or $SiO_2$: 0-3%, preferably being 0-1%; and/or $B_2O_3$: 0-3%, preferably being 0-1%; and/or $Al_2O_3$: 0-2%, preferably being 0-1%; and/or $WO_3$: 0-2%, preferably being 0-1%; and/or $ZrO_2$: 0-2%, preferably being 0-1%; and/or $Bi_2O_3$: 0-2%, preferably being 0-1%; and/or a fining agent: 0-0.5%, preferably being 0-0.1%,
   wherein $Ln_2O_3$ is one or more of $La_2O_3$, $Gd_2O_3$, $Y_2O_3$, $Yb_2O_3$, and $Lu_2O_3$, and the fining agent is one or more of $Sb_2O_3$, $SnO_2$, and $CeO_2$.

6. The optical glass according to anyone of claims 1 to 3, not comprising MgO; and/or not comprising ZnO; not comprising $Li_2O$; and/or not comprising $K_2O$; and/or not comprising $Ln_2O_3$; and/or not comprising $B_2O_3$; and/or not

comprising $Al_2O_3$; and/or not comprising $WO_3$; and/or not comprising $ZrO_2$; and/or not comprising $Bi_2O_3$; and/or not comprising a fining agent,

wherein $Ln_2O_3$ is one or more of $La_2O_3$, $Gd_2O_3$, $Y_2O_3$, $Yb_2O_3$, and $Lu_2O_3$, and the clarifying agent is one or more of $Sb_2O_3$, $SnO_2$, and $CeO_2$.

7. The optical glass according to anyone of claims 1 to 3, wherein a refractive index $n_d$ of the optical glass is 1.82 to 1.89, preferably being 1.83 to 1.88, more preferably being 1.84 to 1.87; an Abbe number $\nu_d$ is 18 to 26, preferably being 20 to 25, more preferably being 21 to 24.

8. The optical glass according to anyone of claims 1 to 3, wherein a coefficient of thermal expansion $\alpha_{100/300°C}$ of the optical glass is $100 \times 10^{-7}$/K or less, preferably being $95 \times 10^{-7}$/K or less; and/or an acid resistance durability $D_A$ is class 2 or better, preferably being class 1; and/or a water resistance durability $D_W$ is class 2 or better, preferably being class 1; and/or a relative partial dispersion $P_{g,F}$ is 0.58 to 0.72, preferably being 0.60 to 0.68, more preferably being 0.62 to 0.65; and/or an anomalous partial dispersion value $\Delta P_{g,F}$ is 0.08 or less, preferably being 0.005 to 0.06, more preferably being 0.01 to 0.04; and/or a transition temperature $T_g$ is 670°C or less, preferably being 660°C or less, more preferably being 650°C or less; and/or an abrasion resistance $F_A$ is 250 to 290, preferably being 260 to 285, more preferably being 265 to 280; and/or a density $\rho$ is 4.00 g/cm$^3$ or less, preferably being 3.90 g/cm$^3$ or less, more preferably being 3.80 g/cm$^3$ or less; and/or $\lambda_{70}$ is 430 nm or less, preferably being 420 nm or less, more preferably being 410 nm or less; and/or $\lambda_5$ is 400 nm or less, preferably being 390 nm or less, more preferably being 380 nm or less; and/or a climatic resistance CR is class 2 or better, preferably being class 1; and/or a Young's modulus E is $8000 \times 10^7$ Pa or higher, preferably being $8500 \times 10^7$ Pa or higher, more preferably being $9000 \times 10^7$ Pa or higher; and/or a bubble degree is Grade A or better, preferably being Grade $A_0$ or better, more preferably being Grade $A_{00}$ or better.

9. An optical glass preform, wherein the optical glass preform is made of the optical glass according to anyone of the claims 1 to 8.

10. An optical element, wherein the optical element is made of the optical glass according to anyone of the claims 1 to 8, or is made of the optical glass preform according to claim 9.

11. An optical instrument, comprising the optical glass according to anyone of the claims 1 to 8, or comprising the optical element according to claim 10.

## INTERNATIONAL SEARCH REPORT

| International application No. |
|---|
| **PCT/CN2024/098006** |

| A. | CLASSIFICATION OF SUBJECT MATTER |
|---|---|

C03C3/21(2006.01)i;  C03C3/16(2006.01)i;  C03C3/068(2006.01)i

According to International Patent Classification (IPC) or to both national classification and IPC

| B. | FIELDS SEARCHED |
|---|---|

Minimum documentation searched (classification system followed by classification symbols)

IPC:C03C

Documentation searched other than minimum documentation to the extent that such documents are included in the fields searched

Electronic data base consulted during the international search (name of data base and, where practicable, search terms used)

CNTXT, VEN, CNABS, ENTXT, WPABS, ISI, CNKI: 光学玻璃, 折射率, 阿贝数, 热膨胀系数, 色散, 杨氏模量, P2O5, Nb2O5, TiO2, BaO, Na2O, optical glass, phosphorus pentoxide, niobium oxide, titanium dioxide, barium oxide, sodium oxide, Refractive index, Abbe number, Coefficient of thermal expansion, Dispersion, Young's modulus

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117185650 A (CDGM GLASS CO., LTD.) 08 December 2023 (2023-12-08) claims 1-14 | 1-11 |
| PX | CN 117185651 A (CDGM GLASS CO., LTD.) 08 December 2023 (2023-12-08) claims 1-13 | 1-11 |
| PX | CN 117185652 A (CDGM GLASS CO., LTD.) 08 December 2023 (2023-12-08) claims 1-14 | 1-11 |
| PX | CN 117185653 A (CDGM GLASS CO., LTD.) 08 December 2023 (2023-12-08) claims 1-13 | 1-11 |
| X | CN 102712523 A (OHARA INC. et al.) 03 October 2012 (2012-10-03) description, paragraphs 0029-0034, 0083-0085, 101-175, and 202, table 5, embodiment 22, and table 6, embodiment 32 | 1-11 |
| X | CN 101186439 A (CDGM GLASS CO., LTD.) 28 May 2008 (2008-05-28) claims 1-9, and embodiment 8 | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 August 2024** | **31 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/098006** |

### C.     DOCUMENTS CONSIDERED TO BE RELEVANT

| Category* | Citation of document, with indication, where appropriate, of the relevant passages | Relevant to claim No. |
| --- | --- | --- |
| X | CN 1590328 A (HOYA CORP.) 09 March 2005 (2005-03-09)<br>claims 1-14, and embodiments 7 and 8 | 1-11 |
| X | JP 2010006675 A (OHARA K. K.) 14 January 2010 (2010-01-14)<br>embodiments 1-5, and description, paragraph 0036 | 1-11 |
| A | CN 101941796 A (HUBEI NEW HUAGUANG INFORMATION MATERIALS CO., LTD.)<br>12 January 2011 (2011-01-12)<br>entire document | 1-11 |
| A | JP H06345481 A (OHARA K. K.) 20 December 1994 (1994-12-20)<br>entire document | 1-11 |
| A | JP S61146732 A (MINOLTA CAMERA K. K.) 04 July 1986 (1986-07-04)<br>entire document | 1-11 |

Form PCT/ISA/210 (second sheet) (July 2022)

## INTERNATIONAL SEARCH REPORT
### Information on patent family members

International application No.

**PCT/CN2024/098006**

| Patent document cited in search report | | | Publication date (day/month/year) | Patent family member(s) | | | Publication date (day/month/year) |
|---|---|---|---|---|---|---|---|
| CN | 117185650 | A | 08 December 2023 | None | | | |
| CN | 117185651 | A | 08 December 2023 | None | | | |
| CN | 117185652 | A | 08 December 2023 | None | | | |
| CN | 117185653 | A | 08 December 2023 | None | | | |
| CN | 102712523 | A | 03 October 2012 | KR | 20120125466 | A | 15 November 2012 |
| | | | | WO | 2011086855 | A1 | 21 July 2011 |
| | | | | TW | 201139319 | A | 16 November 2011 |
| | | | | TWI | 529151 | B | 11 April 2016 |
| CN | 101186439 | A | 28 May 2008 | None | | | |
| CN | 1590328 | A | 09 March 2005 | US | 2005049132 | A1 | 03 March 2005 |
| | | | | US | 7603876 | B2 | 20 October 2009 |
| | | | | JP | 2005075665 | A | 24 March 2005 |
| | | | | JP | 3995641 | B2 | 24 October 2007 |
| JP | 2010006675 | A | 14 January 2010 | JP | 5345806 | B2 | 20 November 2013 |
| CN | 101941796 | A | 12 January 2011 | None | | | |
| JP | H06345481 | A | 20 December 1994 | JP | 2747964 | B2 | 06 May 1998 |
| JP | S61146732 | A | 04 July 1986 | None | | | |

Form PCT/ISA/210 (patent family annex) (July 2022)

**REFERENCES CITED IN THE DESCRIPTION**

**Patent documents cited in the description**

- CN 1186279 C
- CN 1229293 C
- CN 102471130 A
- CN 101932532 A
- CN 101289275 A
- GB 796212010 T
- GB 7962162010 T
- GB 17129 T
- GB 7962202010 T
- GB 796282010 T